(19) Europäisches Patentamt European Patent Office Office européen des brevets

(11) **EP 2 985 813 A1**

(12) **EUROPEAN PATENT APPLICATION**

(43) Date of publication:
**17.02.2016 Bulletin 2016/07**

(51) Int Cl.:
**H01M 2/14** (2006.01)   **H01M 2/16** (2006.01)
**H01M 10/0525** (2010.01)   **H01M 10/058** (2010.01)

(21) Application number: **15180828.4**

(22) Date of filing: **12.08.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA**<br><br>(30) Priority: **13.08.2014   KR 20140105425**<br><br>(71) Applicant: **Samsung SDI Co., Ltd.**<br>**Yongin-si, Gyeonggi-do 17084 (KR)**<br><br>(72) Inventors:<br>• **KIM, Ihn**<br>**Gyeonggi-do (KR)** | • **KIM, Youngsu**<br>**Gyeonggi-do (KR)**<br>• **JO, Yunkyung**<br>**Gyeonggi-do (KR)**<br>• **PARK, Narae**<br>**Gyeonggi-do (KR)**<br>• **MOON, Jungjin**<br>**Gyeonggi-do (KR)**<br>• **MIN, Seungjun**<br>**Gyeonggi-do (KR)**<br>• **KO, Sunggwi**<br>**Gyeonggi-do (KR)**<br><br>(74) Representative: **Taor, Simon Edward William**<br>**Venner Shipley LLP**<br>**200 Aldersgate**<br>**London EC1A 4HD (GB)** |

(54) **SEPARATOR FOR LITHIUM SECONDARY BATTERY, LITHIUM SECONDARY BATTERY USING THE SEPARATOR, AND METHOD OF MANUFACTURING THE LITHIUM SECONDARY BATTERY**

(57)   A separator, a lithium secondary battery including the separator, and a method of manufacturing the lithium secondary battery are provided. The separator includes a porous base, and a first coating layer disposed on a surface of the porous base, wherein the first coating layer includes a (meth)acrylic acid ester-based polymer having a glass transition temperature of about 10°C to about 60°C. The first coating layer may be disposed opposite to a cathode of the lithium secondary battery.

FIG. 1

EP 2 985 813 A1

**EP 2 985 813 A1**

**Description**

One or more embodiments of the present disclosure relate to a separator for a lithium secondary battery, a lithium secondary battery including the separator, and a method of manufacturing the lithium secondary battery.

Lithium secondary batteries have high voltage and high energy density, and thus have various applications. Devices such as electric vehicles, including hybrid electric vehicles (HEVs) and plug-in-electric vehicles (PHEV), should be operable at high temperatures, be able to charge or discharge a large amount of electricity, and have long-term usability, and thus require lithium secondary batteries having high-discharge capacity and better lifetime characteristics.

A lithium secondary battery may be assembled by disposing a separator between a cathode and an anode. The separator may serve as a path of ions in the lithium secondary battery, and may prevent a short circuit by being in directly contact with the cathode and the anode.

To simplify the manufacturing process of lithium secondary batteries and improve battery characteristics, there has been suggested a separator having a surface coated with an adhesive polymer to improve the binding strength to the cathode and anode.

However, using such separators suggested so far, coated with an adhesive polymer, may reduce air permeability and mobility of lithium ions since the adhesive polymer may block pores of the separator, and consequentially lower performance of the lithium secondary battery. The surface of the separator coated with the adhesive polymer may be so sticky that it may adhere to itself, and therefore it may be hard to manufacture the separator in a roll form or unroll the separator.

One or more embodiments of the present disclosure include a separator for a lithium secondary battery, the separator having improved binding strength to electrodes.

One or more embodiments of the present disclosure include a lithium secondary battery that is improved in charge-discharge efficiency and capacity retention rate by using the separator.

One or more embodiments of the present disclosure include a method of manufacturing the lithium secondary battery.

Additional aspects will be set forth in part in the description which follows and, in part, will be apparent from the description, or may be learned by practice of the presented embodiments.

According to one or more embodiments of the present disclosure, a separator for a lithium secondary battery includes: a porous base; and a first coating layer disposed on a surface of the porous base, wherein the first coating layer includes a (meth)acrylic acid ester-based polymer having a glass transition temperature of about 10°C to about 60°C.

The first coating layer of the separator may be disposed opposite to a cathode of the lithium secondary battery.

According to one or more embodiments of the present disclosure, a lithium secondary battery includes: a cathode; an anode; and any of the separators according to the above-described embodiments.

According to one or more embodiments of the present disclosure, a method of manufacturing a lithium secondary battery includes: forming a battery assembly that includes a cathode, an anode, and any of the separators according to the above-described embodiments; rolling up or stacking the battery assembly and then heating pressing the resultant at a temperature of at about 80°C to about 120°C to obtain a combined battery assembly; and impregnating the combined battery assembly with an electrolyte.

According to an aspect of the invention, there is provided a separator as set out in claim 1. Preferred features of this aspect are set out in claims 2 to 11.

According to an aspect of the invention, there is provided a secondary battery as set out in claim 12.

According to an aspect of the invention, there is provided a method of manufacturing a lithium secondary battery as set out in claim 13. Preferred features of this aspect are set out in claim 14.

These and/or other aspects will become apparent and more readily appreciated from the following description of the embodiments, taken in conjunction with the accompanying drawings in which:

FIG. 1 is a sectional view of a first coating layer for a separator according to an embodiment of the present disclosure; and
FIG. 2 is a schematic view of a lithium secondary battery according to an embodiment of the present disclosure.

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed. Expressions such as "at least one of," when preceding a list of elements, modify the entire list of elements and do not modify the individual elements of the list.

Hereinafter, exemplary embodiments of a separator for a lithium secondary battery, a lithium secondary battery

2

including the separator, and a method of manufacturing the lithium secondary battery will be described in greater detail.

When a coating layer of a separator for a lithium secondary battery includes an adhesive polymer having a glass transition temperature of room temperature (25°C) or less, for example, about -15°C, the coating layer including the adhesive polymer may have a sticky surface. When the separator is a common roll type, the stickiness of the coating layer may make the separator stuck to the same and useless. To address this drawback, a release layer may be attached to the coating layer. However, this may need an additional process of laminating the release layer in a battery manufacturing process and increase the battery manufacturing costs. Such a low glass transition temperature of the adhesive polymer may aggregate particles of the adhesive polymer together at interfaces thereof, lower a degree of air permeability of the coating layer including the adhesive polymer, and consequently lower mobility of lithium ions of a lithium secondary battery, thus resulting in poor characteristics of the lithium secondary battery.

To address these drawbacks, an embodiment of the present disclosure includes a separator for a lithium secondary battery, the separator including a porous base, and a first coating layer disposed on a surface of the porous base, wherein the first coating layer includes a (meth)acrylic acid ester-based polymer having a glass transition temperature of about 10°C to about 60°C. The first coating layer may be disposed opposite to a cathode of the lithium secondary battery.

The (meth)acrylic acid ester-based polymer may have a glass transition temperature of about 20°C to about 60°C, for example, about 30°C to about 50°C.

When the (meth)acrylic acid ester-based polymer has a glass transition temperature of less than 10°C, a surface of the coating layer including the (meth)acrylic acid ester-based polymer may be sticky at room temperature, make the separator stuck to itself at interfaces thereof, and consequentially make it impossible to wind a battery assembly including the separator and electrodes in roll form. When the (meth)acrylic acid ester-based polymer has a glass transition temperature of higher than 60°C, the binding strength between an electrode and the separator may not be strong enough.

In some embodiments of the present disclosure, the separator with the first coating layer including the (meth)acrylic acid ester-based polymer having a glass transition temperature within the above-defined ranges may not stick to itself since the first coating layer may not be sticky at room temperature, may prevent a decrease in air permeability of the first coating layer and a decrease in mobility of lithium ions, and may improve the binding strength between the electrodes and the separator. The improved adhesion between the electrodes and the separator may facilitate migration of lithium ions at the interfaces between the electrodes and the separator to improve a charge-discharge efficiency, may also be maintained even when it is used for a long time to improve lifetime characteristics, and may suppress shrinkage of the separator at high temperatures to improve thermal stability of the battery.

In some embodiments, the first coating layer of the separator may be disposed opposite to a cathode of the first coating layer.

In some embodiments, the surface of the porous base in the separator may be fully or partially coated with the first coating layer.

In some embodiments, the first coating layer may be on the entire surface of the porous base, and/or in some and/or all pores of the porous base.

In some embodiments, the first coating layer may be a dot-pattern layer including a plurality of dots arranged at a predetermined interval. This may further improve lithium ion permeability of the separator.

The dot-pattern layer as the first coating layer may be in any array pattern of dots in different shapes and different sizes, provided that the lithium ion transfer of the separator having first coating layer. For example, dots of the dot-pattern layer may be in any shape, for example circular, triangular, rectangular, elliptical, fan-like, or diamondlike shape. For example, the dots of the dot-pattern layer may be connected together to form a single dot.

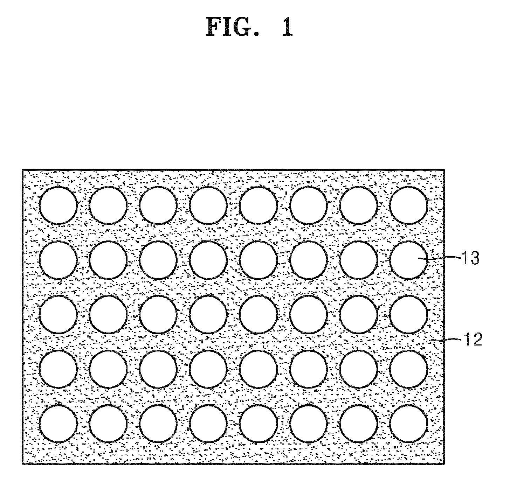

FIG. 1 is a sectional view of a first coating layer 12 for a separator according to an embodiment of the present disclosure, formed as a dot-pattern layer. Referring to FIG. 1, the first coating layer 12 may have a dot-pattern layer structure including a plurality of circular dots arranged at a predetermined interval.

The dots of the dot-pattern layer may have an average diameter of about 0.1 mm to about 1 mm, an interval of about 0.1 mm to about 10 mm, and an average thickness of about 0.3 $\mu$m to about 10 $\mu$m, in consideration of improving binding strength to a target electrode and the consequential likelihood of performance degradation of a lithium secondary battery. When the size, interval, and thickness of the dots of the dot-pattern layer are small enough to improve the binding strength to the electrode, the binding strength between components of the porous first coating layer as the dot-pattern layer may also be improved to prevent detachment of the components of the first coating layer.

As used herein, the terms "average diameter" of dots refers to an average of diameters when the dots are circular, or may also refer to a largest length or side length when the dots are rectangular. The term "interval" of dots refers to a distance between center points of adjacent dots.

A total area of the first coating layer as a dot-pattern layer may be in a range of about 10% to about 70%, and in some embodiments, about 20% to about 60%, and in some other embodiments, about 30% to about 50%, based on a total area of the separator. When the total area of the first coating layer as a dot-pattern layer is within these ranges, the separator may be easily impregnated with an electrolyte, and have improved adhesion to an electrode.

The (meth)acrylic acid ester-based polymer may be a polymerization product between an ethylenically unsaturated carboxylic acid ester and a monomer that is copolymerizable with the ethylenically unsaturated carboxylic acid ester. As used herein, the term "polymerization" may also include cross-linking reaction.

The polymerization may be prepared via copolymerization by emulsification polymerization.

Non-limiting examples of the ethylenically unsaturated carboxylic acid ester are acrylic acid alkyl esters and substituted alkyl esters thereof, including methyl acrylate, ethyl acrylate, propyl acrylate, isopropyl acrylate, n-butyl acrylate, isobutyl acrylate, n-amyl acrylate, isoamyl acrylate, n-hexyl acrylate, 2-ethylhexyl acrylate, isobornyl acrylate, hydroxypropyl acrylate, hydroxyethyl acrylate, lauryl acrylate, and the like; methacrylic acid alkyl esters and substituted alkyl esters thereof, including methyl methacrylate, ethyl methacrylate, propyl methacrylate, isopropyl methacrylate, n-butyl methacrylate, isobutyl methacrylate, n-amyl methacrylate, isoamyl methacrylate, n- hexyl methacrylate, 2-ethylhexyl methacrylate, hydroxypropyl methacrylate, lauryl methacrylate, hydroxyethyl methacrylate, and the like; crotonic acid alkyl esters and substituted alkyl esters thereof, including, methyl crotonate, ethyl crotonate, propyl crotonate, butyl crotonate, isobutyl crotonate, n- crotonate amyl, isoamyl crotonate, n-hexyl crotonate, 2-ethylhexyl crotonate, hydroxypropyl crotonate, hydroxyethyl crotonate, and the like; amino group-containing methacrylic acid esters, including dimethylaminoethyl methacrylate, diethylaminoethyl methacrylate, and the like; alkoxy group-containing methacrylic acid esters, including methoxy polyethylene glycol monomethacrylate, and the like; and unsaturated dicarboxylic acid monoesters, including monooctyl maleate, monobutyl maleate, monooctyl itaconate, and the like. Any ethylenically unsaturated carboxylic acid esters available in the art may be used.

Non-limiting examples of the monomer that is copolymerizable with such an ethylenically unsaturated carboxylic acid ester as listed above are unsaturated carboxylic acids, including acrylic acid, methacrylic acid, itaconic acid, fumaric acid, and the like; carboxylic acid esters having at least carbon-carbon double bonds, including diethylene glycol dimethacrylate, diethylene glycol dimethacrylate, trimethylolpropane triacrylate, and the like; styrene-based monomers, including styrene, chlorostyrene, vinyl toluene, t-butyl styrene, vinyl benzoic acid, vinyl benzoate, vinyl naphthalene, chlorome-thyl styrene, hydroxymethyl-styrene, $\alpha$-methylstyrene, divinylbenzene, and the like; amide-based monomers, including acrylamide, N-methylol acrylamide, acrylamide-2-methylpropane sulfonic acid, and the like; $\alpha,\beta$-unsaturated nitrile com-pounds, including acrylonitrile, methacrylonitrile, and the like; olefins, including ethylene, propylene, and the like; diene-based monomers, including butadiene, isoprene, and the like; halogen atom-containing monomers, including vinyl chloride, vinylidene chloride, and the like; vinyl esters, including vinyl acetate, vinyl propionate, vinyl butyrate, vinyl benzoate, and the like; vinyl ethers, including allyl glycidyl ether, methyl vinyl ether, ethyl vinyl ether, butyl vinyl ether, and the like; vinyl ketones, including methyl vinyl ketone, ethyl vinyl ketone, butyl vinyl ketone, vinyl hexyl ketone, vinyl isopropenyl ketone, and the like; heterocyclic vinyl compounds, including N- vinyl pyrrolidone, vinyl pyridine, vinyl imidazole, and the like; and acrylonitrile. Any monomers that are known in the art to be copolymerizable with the above-listed ethylenically unsaturated carboxylic acid esters may be used.

For example, the monomer that is copolymerizable with the an ethylenically unsaturated carboxylic acid ester may be at least one selected from the group consisting of carboxylic acid esters having at least carbon-carbon double bonds, amide-based monomers, $\alpha,\beta$-unsaturated nitrile compounds, and vinyl ethers.

A mixing ratio of the ethylenically unsaturated carboxylic acid ester and the monomer that is copolymerizable with the ethylenically unsaturated carboxylic acid ester may be from about 0.1:99.9 to about 99.9:0.1 by mole.

In some embodiments, the ethylenically unsaturated carboxylic acid ester may be at least one selected from among 2-ethylhexyl acrylate, methyl acrylate, ethyl acrylate, butyl acrylate, hydroxyethyl acrylate, and isobornyl acrylate.

In some embodiments, the monomer copolymerizable with an ethylenically unsaturated carboxylic acid ester is at least one selected from among methacrylic acid, acrylic acid, itaconic acid, ethylene dimethacrylate, and acrylonitrile.

The (meth)acrylic acid ester polymer may have a weight average molecular weight of about 10,000 to about 1,000,000, for example, about 60,000 to about 500,000.

In some embodiments, the (meth)acrylic acid ester-based polymer may have a controlled glass transition temperature of about 10°C to about 60°C by control of the composition of the monomers.

An emulsifier that may be used in the coplymerization by emulsification polymerization may be any emulsifier available in the art for common emulsification polymerization.

For example, the emulsifier may be a non-ionic emulsifier (selected from among) benzene sulfonates including sodium dodecylbenzene sulfonate, sodium dodecyl phenyl ether sulfonate; alkyl sulfates, including sodium lauryl sulfate, sodium tetradodecyl) sulfate; sulfosuccinates, including dioctyl sulfosuccinate, sodium dihexyl sulfosuccinate; fatty acid salts, including sodium laurate; sodium ethoxy sulfates, including sodium polyoxyethylene lauryl ether sulfate, sodium polyoxyethylene nonylphenyl ether sulfate; alkane sulphonates; sodium alkyl ether phosphate ester; and polyoxyethylene nonylphenyl ether, polyoxyethylene sorbitan lauryl ester, and a polyoxyethylene-polyoxypropylene block copolymer. These compounds may be used alone or in a combination of at least two thereof.

The amount of the emulsifier may be in a range of about 0.01 parts to about 10 parts by weight based on 100 parts by weight of a total amount of the monomer. In some embodiments, the emulsifier may not be used depending on polymerization conditions.

A molecular weight control agent may be used. Non-limiting examples of the molecular weight control agent are mercaptans, including t-dodecylmercaptan, n-dodecylmercaptan, n-octyl mercaptan, and the like; halogenated hydrocarbons, including carbon tetrachloride, carbon tetrabromide, and the like; terpinolene; and alpha-methyl styrene dimer.

The molecular weight control agent may be added before or during polymerization. The amount of the molecular weight control agent may be in a range of about 0.01 parts to about 10 parts by weights, and in some embodiments, about 0.1 parts to about 5 parts by weight, based on 100 parts by weight of the monomer.

The molecular weight of the (meth)acrylic acid ester polymer may also be varied depending on the polymerization temperature and the rate of adding the monomer, and accordingly, the molecular weight control agent may not be used.

A polymerization initiator may be used. The polymerization initiator may be any polymerization initiator used in common emulsification polymerization, dispersion polymerization, or suspension polymerization. Non-limiting examples of the polymerization initiator are persulfates, including potassium persulfate, ammonium persulfate, and the like; hydrogen peroxide; organic peroxides, including benzoyl peroxide, cumene hydroperoxide, and the like. These polymerization initiators may be used along or in a combination with a redox polymerization initiator that is a combination with a reducing agent, such as sodium sulfite, sodium thiosulfate, or ascorbic acid. For example, the polymerization initiator may be an azo compound, such as 2,2'-azobisisobutyronitrile (AIBN), 2,2'-azobis(2,4-dimethylvaleronitrile), 2,2'-azobis(4-methoxy-2,4-dimethylvaleronitrile), dimethyl-2,2'-azobisisobutyrate, 4,4'-azobis(4-cyanopentanoic acid), or the like; or an amidine compound, such as 2,2'-azobis(2-amino-di-propane) dihydrochloride, 2,2'-azobis(N,N'-dimethylene isobutyl amidine), 2,2'-azobis(N,N'- dimethylene isobutyl amidine)dihydrochloride, or the like. These polymerization initiators may be used alone or in a combination of at least two thereof. The amount of the polymerization initiator may be in a range of about 0.01 parts to about 10 parts by weight, in some embodiments, about 0.1 parts to about 10 parts by weights, and in some other embodiments, about 0.1 parts to about 5 parts by weight, based on 100 pats by weight of a total weight of the monomer.

Optionally, an anti-aging agent, an anti-staling agent, or an anti-foaming agent may also be added in the copolymerization for the (meth)acrylic acid ester-based polymer.

The (meth)acrylic acid ester-based polymer may be a polymer particle-containing composition, for example, an aqueous emulsion. The aqueous emulsion refers to a dispersion of polymer particles in water.

The polymer particles in the aqueous emulsion may have an average diameter of about 50 nm to about 500 nm, for example, about 200 nm. When the diameter of the polymer particles is within these ranges, a uniform aqueous emulsion without aggregation of particles may be obtained. A solid content of the aqueous emulsion may be in a range of about 10wt% to about 50wt%. When the solid content of the aqueous emulsion is within this range, the aqueous emulsion may be improved in coating workability and emulsion phase stability.

In some embodiments, the (meth)acrylic acid ester-based polymer may be an aqueous emulsion including an acrylic acid ester-based polymer.

In some embodiments, the separator may include a second coating layer disposed on a surface of the porous base opposite to the first coating layer and including a (meth)acrylic acid ester-based polymer.

The second coating layer may be a dot-pattern layer including a plurality of dots arranged at a predetermined interval. The average diameter, interval, and average thickness of the dots in the second coating layer may be the same as those described in conjunction with the first coating layer.

In some embodiments, the separator may further include an inorganic coating layer including inorganic particles between the porous base and first coating layer and/or between the porous base and second coating layer. The inorganic coating layer may efficiently prevent thermal shrinkage of the porous base during use of the lithium secondary battery.

The porous base may be any common porous base that may be used in electrochemical devices. For example, the porous base may be a membrane or fibrous base including one or at least two of polyethylene terephthalate, polybutylene terephthalate, polyester, polyacetal, polyamide, polycarbonate, polyimide, polyether ether ketone, polyether sulfone, polyphenylene oxide, polyphenylene sulfide, polyvinylidene fluoride, polyethylene oxide, polyacrylonitrile, a polyvinylidene fluoride-hexafluoropropylene copolymer, polyethylene, and polypropylene.

The porous base may have a thickness of about 5 $\mu$m to about 20 $\mu$m, a pore size of about 0.001 $\mu$m to about 0.1 $\mu$m, and a porosityof about 10% to about 60%. However, the thickness, pore size, and porosity of the porous base may not be limited thereto in embodiments of the invention.

The inorganic particles of the inorganic coating layer may be any inorganic particles available in the art. For example, the inorganic particles may be at least one selected from $\alpha$- alumina ($\alpha$-Al$_2$O$_3$), $\gamma$- alumina ($\gamma$-Al$_2$O$_3$), boehmite ($\gamma$-AlO (OH)), gibbsite ($\gamma$-Al(OH)$_3$), colloidal silica, zirconium oxide, magnesium fluoride, BaTiO$_3$, SnO$_2$, CeO$_2$, MgO, NiO, CaO, ZnO, Y$_2$O$_3$, TiO$_2$, and SiC. The inorganic particles may have an average particle diameter of about 0.1$\mu$m to about 3 $\mu$m.

When the average particle diameter of the inorganic particles is within this range, the inorganic coating layer may have a uniform thickness and an appropriate porosity.

In some embodiments, the separator may further include a third coating layer including an inorganic particle and a binder between the porous base and the first coating layer and/or between the porous base and second coating layer.

The binder polymer may be any binder polymer available in the art that is stable in an electrolyte solution and at an operating voltage of a lithium secondary battery. A non-limiting example of the binder is at least one selected from the group consisting of a (meth)acrylic acid ester-based polymer, polyethylene, polypropylene, an ethylene-propylene copolymer, polyvinyl chloride, polyvinylidene chloride, polystyrene, polyacrylonitrile, polytetrafluoroethylene, polymethyl methacrylate, polyvinyl acetate, polyisoprene, polychloroprene, polyester, polycarbonate, polyamide, polyacrylate, polyurethane, an acrylonitrile-butadiene-styrene terpolymer, polyoxyethylene, polyoxymethylene, polyoxypropylene, a styrene-acrylonitrile copolymer, an acrylonitrile-styrene-acrylate terpolymer, a styrene-butadiene copolymer, an acrylated styrene-butadiene copolymer, an acrylonitril-butadiene copolymer, an acrylonitrile-butadiene-styrene terpolymer, acrylic rubber, butyl rubber, fluoro rubber, polyvinyl pyrrolidone, polyepichlorohydrin, polyphosphazene, an ethylene-propylene-diene terpolymer, polyvinyl pyridine, chlorosulfonated polyethylene, polysulfone, polyvinyl alcohol, polyvinyl acetate, thermoplastic polyester rubber (PTEE), carboxymethyl cellulose, hydroxypropyl methyl cellulose, hydroxypropyl cellulose, and diacetyl cellulose.

For example, the binder may be a polymer particle-containing composition including particles of such a polymer listed above dispersed in an aqueous solvent. The polymer particle-containing composition may be an aqueous emulsion. The polymer particles in the aqueous emulsion may have an average particle diameter of about 50 nm to about 500 nm, for example, about 120 nm. When the diameter of the polymer particles are within these ranges, the binding strength between the porous base and the coating layer may have improved.

A solid content of the aqueous emulsion may be in a range of about 20wt% to about 50%. When the solid content of the aqueous emulsion is within this range, the aqueous emulsion may be improved in coating workability and emulsion phase stability.

The amount of the inorganic particle may be in a range of about 1 part to about 20 parts by weight based on 100 parts by weight of the binder. When the amount of the inorganic particle is within this range, shrinking of the separator may be prevented when the internal temperature of the battery rises, without a decrease in binding strength of the third coating layer to the porous base.

In some embodiments, the separator may have a thickness of about 10 $\mu$m to about 25$\mu$m, and in some other embodiments, about 16 $\mu$m to about 22$\mu$m. When the thickness of the separator is within these ranges, the separator may effectively separate the anode and the cathode from one another to prevent a short circuit and may improve capacity of the lithium secondary battery.

Hereinafter, a method of manufacturing a separator according to an embodiment of the present disclosure will be described.

First, a composition including a (meth)acrylic acid ester-based polymer having a glass transition temperature of about 10°C to about 60°C is coated on a surface of a porous base, and then dried to form a first coating layer. The first coating layer of the separator may be disposed opposite to a cathode of a lithium secondary battery. The drying may be performed at a temperature of about 20°C to about 85°C.

The composition including the (meth)acrylic acid ester-based polymer may be an aqueous emulsion of the (meth)acrylic acid ester-based polymer, and may also further include a solvent in addition to the aqueous emulsion. For example, the solvent may be water, acetone, tetrahydrofuran, methylene chloride, chloroform, dimethylformamide, N-methyl-2-pyrrolidone, cyclohexane, or a mixture thereof.

A composition including a (meth)acrylic acid ester-based polymer may be coated on a surface of the porous base opposite to the first coating layer in the same manner as described in conjunction with the first coating layer to form a second coating layer.

The first coating layer and the second coating layer may be formed as dot-pattern layers. The first coating layer and the second coating layer as dot-pattern layers may improve ion permeability of the separator and characteristics of the lithium secondary battery.

A composition including an inorganic particle may be coated between the porous base and the first coating layer and/or between the porous base and the second coating layer, and then dried to form an inorganic coating layer. The drying may be performed at a temperature of about 20°C to about 85°C.

The inorganic coating layer may be formed by coating the composition including an inorganic particle by, for example, micro gravure coating or dip coating, to have a dry thickness of about 3 $\mu$m to about 4$\mu$m.

A composition including an inorganic particle and a binder polymer may be coated between the porous base and the first coating layer and/or between the porous base and the second coating layer, and then dried to form a third coating layer.

The inorganic particle-containing composition for the inorganic coating layer, and the inorganic particle- and binder polymer-containing composition for the third coating layer may each further include a solvent. A non-limiting example of the solvent is acetone, tetrahydrofuran, methylene chloride, chloroform, dimethylformamide, N-methyl-2-pyrrolidone, cyclohexane, water, or a mixture thereof.

In preparing the inorganic particle- and binder polymer-containing composition, the inorganic particle may be ground after being added to a binder polymer-containing solution. The time of grinding the inorganic particle may be about 1 hour to 20 hours, and the ground inorganic particle may have a particle diameter of about 0.1 $\mu$m to about 3 $\mu$m as described above. The grinding may be performed using a common method, for example, ball milling.

The coating of the first coating layer, the second coating layer, and the third coating layer may be performed using a common coating method known in the art, for example, using any of a variety of methods, dip coating, die coating, roll coating, comma coating, gravure coating, or a combination thereof.

The first coating layer and the second coating layer may be formed as dot-pattern layers, for example, by coating a first coating layer composition and a second coating layer composition, respectively, by using a gravure roll having a dot pattern, and then drying the same. The drying may be performed at a temperature of about 20°C to about 85°C.

Hereinafter, a method of manufacturing a lithium secondary battery including any of the separators according to the above-described embodiments, according to an embodiment of the present disclosure will be described.

First, an anode active material, a conducting agent, a binder, and a solvent may be mixed to prepare an anode active material layer composition. The anode active material layer composition may be directly coated on a metallic current collector and dried to form an anode.

Alternatively, the anode active material layer composition may be cast on a separate support to form an anode active material layer, which may then be separated from the support and laminated on a metallic current collector to form an anode. The anode is not limited to the examples described above, and may be in any form a variety of types in embodiments of the invention.

The anode active material may be a non-carbonaceous material. For example, the anode active material may include at least one selected from the group consisting of a metal that is alloyable with lithium, an alloy of the metal that is alloyable with lithium, and an oxide of the metal that is alloyable with lithium.

Examples of the metal alloyable with lithium include Si, Sn, Al, Ge, Pb, Bi, Sb, a Si-Y alloy (where Y is an alkali metal, an alkali earth metal, a Group 14 to 16 element, a transition metal, a rare earth element, or a combination thereof except for Si), and a Sn-Y alloy (where Y is an alkali metal, an alkali earth metal, a Group 13 to 16 element, a transition metal, a rare earth element, or a combination thereof except for Sn). Y may be magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), germanium (Ge), phosphorus (P), arsenic (As), antimony (Sb), bismuth (Bi), sulfur (S), selenium (Se), tellurium (Te), polonium (Po), or combinations thereof.

Non-limiting examples of the transition metal oxide are a lithium titanium oxide, a vanadium oxide, and a lithium vanadium oxide.

Non-limiting examples of the nontransition metal oxide are $SnO_2$ and $SiO_x$ (where $0<x<2$).

For example, the anode active material may be at least one selected from the group consisting of Si, Sn, Pb, Ge, Al, $SiO_x$ (where $o<x\leq2$), $SnO_y$ (where $o<y\leq2$), $Li_4Ti_5O_{12}$, $TiO_2$, $LiTiO_3$, and $Li_2Ti_3O_7$, but is not limited thereto in embodiments of the invention. The anode active material may be any non-carbonaceous anode active material available in the art.

In some embodiments, the anode active material may be a composite of a non-carbonaceous anode active material as listed above and a carbonaceous material. The anode active material may also further include a carbonaceous anode active material in addition to a non-carbonaceous material as listed above.

Non-limiting examples of the carbonaceous material are crystalline carbon, amorphous carbon, or mixtures thereof. Non-limiting examples of the crystalline carbon are graphite, such as natural graphite or artificial graphite that are in non-shaped, plate, flake, spherical or fibrous form. Non-limiting examples of the amorphous carbon include soft carbon (carbon sintered at low temperatures), hard carbon, mesophase pitch carbides, sintered corks, and the like.

Non-limiting examples of the conducting agent are acetylene black, ketjen black, natural graphite, artificial graphite, carbon black, carbon fiber, and metal powder and metal fiber of, for example, copper, nickel, aluminum or silver. In some embodiments at least one conducting material such as polyphenylene derivatives may be used in combination. Any conducting agent available in the art may be used. Any of the above-described crystalline carbonaceous materials may be added as the conducting agent.

Non-limiting examples of the binder are a vinylidene fluoride-hexafluoropropylene copolymer, polyvinylidene fluoride (PVDF), polyacrylonitrile, polymethylmethacrylate, polytetrafluoroethylene, mixtures thereof, and a styrene butadiene rubber polymer, but are not limited thereto in embodiments of the invention. Any material available as a binding agent in the art may be used.

Non-limiting examples of the solvent are N-methyl-pyrrolidone, acetone, and water. Any material available as a solvent in the art may be used.

The amounts of the anode active material, the conducting agent, the binder, and the solvent may be those levels that are generally used in lithium secondary batteries in the art. At least one of the conducting agent, the binder

and the solvent may not be used depending on the use and the structure of the lithium secondary battery.

Next, a cathode active material, a conducting agent, a binder, and a solvent may be mixed to prepare a cathode active material layer composition. The cathode active material layer composition may be directly coated on a metallic current collector and dried to form a cathode. Alternatively, the cathode active material layer composition may be cast on a support to form a cathode active material layer, which may then be separated from the support and laminated on a metallic current collector to form a cathode.

The cathode active material may be at least one selected from the group consisting of lithium cobalt oxide, lithium nickel cobalt manganese oxide, lithium nickel cobalt aluminum oxide, lithium iron phosphorous oxide, and lithium manganese oxide, but is not limited thereto in embodiments of the invention. Any cathode active materials available in the art may be used.

For example, the cathode active material may be a compound represented by one of the following formulae: $Li_aA_{1-b}B_bD_2$ (where $0.90 \leq a \leq 1.8$, and $0 \leq b \leq 0.5$); $Li_aE_{1-b}B_bO_{2-c}D_c$ (where $0.90 \leq a \leq 1.8$, $0 \leq b \leq 0.5$, and $0 \leq c \leq 0.05$); $LiE_{2-b}B_bO_{4-c}D_c$ (where $0 \leq b \leq 0.5$, and $0 \leq c \leq 0.05$); $Li_aNi_{1-b-c}Co_bB_cD_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (where $0.90 \leq a \leq 1.8$, $0 \leq b \leq 0.5$, $0 \leq c \leq 0.05$, and $0 < \alpha < 2$); $Li_aNi_{1-b-c}Co_bB_cO_{2-\alpha}F_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bB_cD_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bB_eO_{2-\alpha}F_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bB_eO_{5-\alpha}F_\alpha$ (where $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq_{0.5}$, and $0.001 \leq d \leq 0.1$); $Li_aNi_bCo_cMn_dGeO_2$ (where $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1.8$, and $0.001 \leq b \leq 0.1$); $Li_aCoG_bO_2$ (where $0.90 \leq a \leq 1.8$, and $0.001 \leq b \leq 0.1$); $Li_aMnG_bO_2$ (where $0.90 \leq a \leq 1.8$, and $0.001 \leq b \leq 0.1$); $Li_aMn_2G_bO_4$ (where $0.90 \leq a \leq 1.8$, and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq 2$); and $LiFePO_4$.

In the formulae above, A is selected from the group consisting of nickel (Ni), cobalt (Co), manganese (Mn), and combinations thereof; B is selected from the group consisting of aluminum (Al), nickel (Ni), cobalt (Co), manganese (Mn), chromium (Cr), iron (Fe), magnesium (Mg), strontium (Sr), vanadium (V), a rare earth element, and combinations thereof; D is selected from the group consisting of oxygen (O), fluorine (F), sulfur (S), phosphorus (P), and combinations thereof; E is selected from the group consisting of cobalt (Co), manganese (Mn), and combinations thereof; F is selected from the group consisting of fluorine (F), sulfur (S), phosphorus (P), and combinations thereof; G is selected from the group consisting of aluminum (Al), chromium (Cr), manganese (Mn), iron (Fe), magnesium (Mg), lanthanum (La), cerium (Ce), strontium (Sr), vanadium (V), and combinations thereof; Q is selected from the group consisting of titanium (Ti), molybdenum (Mo), manganese (Mn), and combinations thereof; I is selected from the group consisting of chromium (Cr), vanadium (V), iron (Fe), scandium (Sc), yttrium (Y), and combinations thereof; and J is selected from the group consisting of vanadium (V), chromium (Cr), manganese (Mn), cobalt (Co), nickel (Ni), copper (Cu), and combinations thereof.

The compounds listed above as cathode active materials may have a surface coating layer (hereinafter, "coating layer"). Alternatively, a mixture of a compound without having a coating layer and a compound having a coating layer, the compounds being selected from the compounds listed above, may be used. The coating layer may include at least one compound of a coating element selected from the group consisting of oxide, hydroxide, oxyhydroxide, oxycarbonate, and hydroxycarbonate of the coating element. The compounds for the coating layer may be amorphous or crystalline. The coating element for the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or mixtures thereof. The coating layer may be formed using any method that does not adversely affect the physical properties of the cathode active material when a compound of the coating element is used. For example, the coating layer may be formed using a spray coating method, a dipping method, or the like. This is obvious to those of skill in the art, and thus a detailed description thereof will be omitted.

For example, the cathode active material may be $LiNiO_2$, $LiCoO_2$, $LiMn_xO_{2x}$ (where x=1 or 2), $LiNi_{1-x}Mn_xO_2$ (where $0 < x < 1$), $LiNi_{1-x-y}Co_xMn_yO_2$ (where $0 \leq x \leq 0.5$ and $0 \leq y \leq 0.5$), $LiFeO_2$, $V_2O_5$, $TiS$, $MoS$, or the like.

The conducting agent, binder, and solvent used in the cathode active material layer composition may be the same as those used in the anode active material layer composition described above. If required, a plasticizer may be further added to the cathode active material layer composition and/or the anode active material layer composition to form pores in the electrode plates.

The amounts of the cathode active material, the conducting agent, the binder, and the solvent may be those levels that are generally used in lithium secondary batteries in the art. At least one of the conducting agent, the binder and the solvent may not be used depending on the use and the structure of the lithium secondary battery.

Next, a separator according to any of the above-descried embodiments is disposed between the cathode and the anode.

Next, an electrolyte is prepared.

For example, the electrolyte may be an organic electrolyte solution. Alternately, the electrolyte may be in a solid electrolyte. Non-limiting examples of the solid electrolyte are boron oxide and lithium oxynitride. Any material available as a solid electrolyte in the art may be used. The solid electrolyte may be formed on the anode by, for example, sputtering.

In some embodiments, an organic electrolyte solution may be prepared as follows. The organic electrolyte solution may be prepared by dissolving a lithium salt in an organic solvent.

The organic solvent may be any solvent available as an organic solvent in the art. Examples of the organic solvent include propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, $\gamma$-butyrolactone, dioxorane, 4-methyldioxorane, N,N-dimethyl formamide, dimethyl acetamide, dimethylsulfoxide, dioxane, 1,2-dimethoxyethane, sulforane, dichloroethane, chlorobenzene, nitrobenzene, diethylene glycol, dimethyl ether, or mixtures thereof.

The lithium salt may be any material available as a lithium salt in the art. For example, the lithium salt may be $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF2_{x+1}SO_2)(C_yF_{2y+1}SO_2)$ (where x and y are natural numbers), $LiCl$, $LiI$, or a mixture thereof.

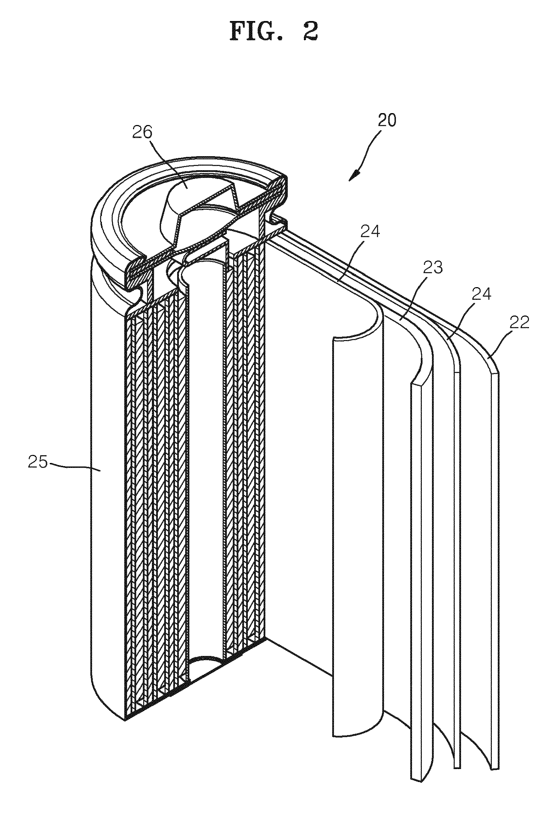

FIG. 2 is a schematic view of a structure of a lithium secondary battery 20 according to an embodiment of the present disclosure.

Referring to FIG. 2, the lithium secondary battery 20 includes a cathode 23, an anode 22, and a separator 24. The cathode 23, the anode 22 and the separator 24 are wound or folded, and then sealed in a battery case 25. Then, the battery case 25 is filled with an organic electrolyte solution and sealed with a cap assembly 26, thereby completing the manufacture of the lithium secondary battery 20. The battery case 5 may be a cylindrical type, a rectangular type, or a thin-film type. For example, the lithium secondary battery 20 may be a thin film type battery. The lithium secondary battery 20 may be a lithium ion battery. The lithium secondary battery 20 may be a lithium polymer battery.

The separator 24 may be interposed between the cathode 3 and the anode 2 to form a battery assembly. The electrode assembly may be in rolled up or stacked. The electrode assembly may then be heat-pressed at a temperature of about 80°C to about 120°C, and in some embodiments, at a temperature of about 100 °C to about 120°C.

Instead of rolling up the electrode assembly, the separator and electrodes may be laminated or stacked upon one another and then be folded.

When the temperature of the thermal compression is within these ranges, the binding strength between the separator and the electrodes may be improved.

Next, the heat-pressed electrode assembly may be impregnated with an organic electrolyte, and then put into a pouch and vacuum-sealed, thereby completing the manufacture of the lithium secondary battery 20.

Alternatively, a plurality of battery assemblies may be stacked upon one another to form a battery pack, which may be used in any device that operates at high temperatures and requires high output, for example, in a laptop computer, a smart phone, an electric vehicle, and the like.

The lithium secondary battery 20 may have improved high rate characteristics and improved lifetime characteristics, and thus may be suitable for use in particularly electric vehicles (EVs), for example, in a hybrid vehicle such as plug-in hybrid electric vehicle (PHEV).

Thereinafter, one or more embodiments of the present disclosure will be described in detail with reference to the following examples. However, these examples are not intended to limit the scope of the one or more embodiments of the present disclosure.

Preparation Example 1: Preparation of acrylic acid ester-based polymer emulsion

After a flask reactor equipped with a condenser, a thermometer, a monomer emulsion inlet, a nitrogen gas inlet, and a stirrer was purged with nitrogen gas, 40 parts by weight of deionized water and 1.5 parts by weight of sodium dodecylbenzene sulfonate were added into the flask reactor, followed by a temperature increase to about 70°C. Next, 40 parts by weight of soft water, and 10wt% of a monomer emulsion solution having the composition as in Table 1 were added into the reactor, and stirred for about 5 minutes, followed by adding 10 parts by weight of a 5wt% aqueous solution of ammonium persulfate into the reactor to initiate reaction. After 1 hour, the remaining monomer emulsion solution was dropwise added at the same time with 6 parts by weight of the 5wt% aqueous solution of ammonium persulfate into the reactor for about 3 hours. After the dropwise adding of the monomer emulsion solution, the reaction mixture was further reacted for about 2 hour to reach a polymerization conversion rate of about 98.2%.

Next, the reaction mixture was cooled down to about 20°C, and the remaining monomer was removed from the reaction mixture under a reduced pressure, followed by a pH adjustment to about 8 and a solid content adjustment to about 40 wt% to obtain acrylic acid ester-based polymer aqueous emulsion A-1.

The acrylic acid ester-based polymer particles in the acrylic acid ester-based polymer aqueous emulsion A-1 had an average particle diameter of about 120 nm and a weight average molecular weight of about 400,000.

Preparation Example 2: Preparation of acrylic acid ester-based polymer emulsion

Acrylic acid ester-based polymer aqueous emulsion A-2 was obtained in the same manner as in Preparation Example 1, except that the composition of the monomer emulsion solution was varied as in Table 1.

The acrylic acid ester-based polymer particles in the acrylic acid ester-based polymer aqueous emulsion A-2 had an average particle diameter of about 130 nm and a weight average molecular weight of about 450,000.

Preparation Example 3: Preparation of acrylic acid ester-based polymer emulsion

Acrylic acid ester-based polymer aqueous emulsion A-3 was obtained in the same manner as in Preparation Example 1, except that the composition of the monomer emulsion solution was varied as in Table 1.

The acrylic acid ester-based polymer particles in the acrylic acid ester-based polymer aqueous emulsion A-3 had an average particle diameter of about 130 nm and a weight average molecular weight of about 400,000.

Comparative Preparation Examples 1 and 2: Preparation of acrylic acid ester-based polymer emulsions

Acrylic acid ester-based polymer aqueous emulsions B-1 and B-2 were obtained in the same manner as in Preparation Example 1, except that the composition of the monomer emulsion solution was varied as in Table 1.

The acrylic acid ester-based polymer particles in both of the acrylic acid ester-based polymer aqueous emulsions B-1 and B-2 had an average particle diameter of about 150 nm and a weight average molecular weight of about 350,000.

The amounts of the components in Table 1 are represented in parts by weight.

[Table 1]

| Composition | Preparation Examples 1 to 3 | | | Comparative Examples 1 and 2 | |
| --- | --- | --- | --- | --- | --- |
| | A-1 | A-2 | A-3 | B-1 | B-2 |
| Deionized water | 40 | 40 | 40 | 40 | 40 |
| Sodium dodecylbenzene sulfonate | 0.5 | 0.5 | 0.5 | 0.5 | 0.5 |
| 2-Ethylhexyl acrylate | 30 | 20 | | 10 | |
| Methyl acrylate | | | 43 | | 53 |
| Ethyl acrylate | | | 37.5 | | |
| Butyl acrylate | | | | | 27.5 |
| Acrylonitrile | 15 | 15 | 15 | 15 | 15 |
| Isobornyl acrylate | 50 | 60 | | 70 | |
| Methacrylic acid | 1 | 1 | 1 | 1 | 1 |
| Acrylic acid | 1.5 | 1.5 | 1 | 1.5 | 1 |
| Hydroxyethyl acrylate | 1.5 | 2 | 2 | 1.5 | 2 |
| Ethylene dimethacrylate | 1 | 0.5 | 0.5 | 1 | 0.5 |

Example 1: Manufacture of separator

The acrylic acid ester-based polymer aqueous emulsion A-1 of Preparation Example 1 was coated on a first surface of a porous polyethylene membrane (having a porosity of about 45%) having a thickness of about 18 $\mu$m by using a gravure coater to have a thickness of about 1.0 $\mu$m after drying,, and then dried at about 80°C, thereby forming a first coating layer. Next, the acrylic acid ester-based polymer aqueous emulsion A-1 was coated on a second surface of the porous polyethylene membrane by using a gravure coater to have a thickness of about 1.0 $\mu$m after drying,, and then dried at about 80°C, thereby forming a second coating layer, thereby completing the manufacture of a separator.

The first coating layer and the second coating layer as dot-pattern layers had an average dot diameter of about 0.25 mm, a dot interval of about 0.15 mm, and an average dot thickness of about 1 $\mu$m. A total area of the first coating layer and the second coating layer as dot-pattern layers was about 46% of a total area of the separator.

Examples 2 and 3: Manufacture of separators

Separators were manufactured in the same manner as in Example 1, except that the acrylic acid ester-based polymer aqueous emulsions A-2 and A-3 of Preparation Examples 2 and 3 were used, respectively, instead of the acrylic acid ester-based polymer aqueous emulsion A-1 of Preparation Example 1.

Comparative Examples 1 and 2: Manufacture of separators

Separators were manufactured in the same manner as in Example 1, except that the acrylic acid ester-based polymer aqueous emulsions B-1 and B-2 of Comparative Preparation Examples 1 and 2 were used, respectively, instead of the acrylic acid ester-based polymer aqueous emulsion A-1 of Preparation Example 1.

Manufacture Example 1: Manufacture of lithium secondary battery.

$LiCoO_2$ as a cathode active material, polyvinylidene fluoride (PVDF) as a binder, and carbon as a conducting agent were mixed in a ratio of about 92:4:4 by weight, and then dispersed in N-methyl-2-pyrrolidon to prepare a cathode slurry. This cathode slurry was coated on an aluminum foil having a thickness of about $20 \mu m$, dried, and then roll-pressed to obtain a cathode.

Artificial graphite as an anode active material, styrene-butadiene rubber as a binder, and carboxymethylcellulose as a thickening agent were mixed in a ratio of about 96:2:2 by weight, and then dispersed in water to prepare an anode active material slurry. This anode active material slurry was coated on a copper foil having a thickness of $15 \mu m$, dried, and then roll-pressed to manufacture an anode.

The cathode, anode, and separator of Example 1 were assembled to form a stacked cell, which was then heat-pressed at about 90°C at a pressure of 200 kgf for about 40 seconds to bind the cathode, anode, and separator together.

The heat-pressed cell was put into a pouch, and a mixed electrolyte solution of ethylene carbonate (EC), ethylmethylcarbonate (EMC), and diethylcarbonace (DEC) in a ratio of about 3:5:2 by volume, the mixed electrolyte solution including 1.3M of $LiPF_6$, was injected into the pouch, which was then vacuum-sealed, thereby manufacturing a lithium secondary battery.

Manufacture Examples 2 and 3: Manufacture of lithium secondary batteries

Lithium secondary batteries were manufactured in the same manner as in Manufacture Example 1, except that the separators of Examples 2 and 3 were used, respectively, instead of the separator of Example 1.

Comparative Manufacture Examples 1 and 2: Manufacture of lithium seconds batteries

Lithium secondary batteries were manufactured in the same manner as in Manufacture Example 1, except that the separators of Comparative Examples 1 and 2 were used, respectively, instead of the separator of Example 1.

Evaluation Example 1: Glass transition temperature measurement

Glass transition temperatures of the acrylic acid ester-based polymers in the acrylic acid ester-based polymer aqueous emulsions of Preparation Examples 1 to 3 and Comparative Preparation Examples 1 and 2 were measured using differential scanning calorimetry.

The measurement results are shown in Table 2.

[Table 2]

| Example | Glass transition temperature (°C) |
|---|---|
| Preparation Example 1 | 20 |
| Preparation Example 2 | 40 |
| Preparation Example 3 | 11 |
| Comparative Preparation Example 1 | 65 |

(continued)

| Example | Glass transition temperature (°C) |
|---|---|
| Comparative Preparation Example 2 | 0 |

Evaluation Example 2: Evaluation of binding strength between separator and electrode

A 180° peel strength test was performed on the lithium secondary batteries of Manufacture Examples 1 to 3 and Comparative Manufacture Examples 1 and 2, including the separators of Examples 1 to 3 and Comparative Examples 1 and 2, respectively, by using an universal testing machine (UTM) to evaluate the binding strength between the separator and the electrodes in each of the lithium secondary batteries.

The results of the peel strength test are shown in Table 3.

[Table 3]

| Example | Peel strength (N/mm) |
|---|---|
| Manufacture Example 1 | 0.11 |
| Manufacture Example 2 | 0.10 |
| Manufacture Example 3 | 0.13 |
| Comparative Manufacture Example 1 | 0.02 |
| Comparative Manufacture Example2 | 0.09 |

Referring to Table 3, the lithium secondary batteries of Manufacture Examples 1 to 3 were found to have more strong binding strength between the separator and the electrode, compared to the lithium secondary batteries of Comparative Manufacture Examples 1 and 2.

Evaluation Example 3: Evaluation of separator's stickiness

Two separators manufactured in each of Examples 1 to 3 and Comparative

Examples 1 and 2 were stacked upon one another, and then pressed at a pressure of about 200 kgf using a press for about 40 seconds, followed by a 180° peel strength test by using a UTM to evaluate the stickiness between the separators. The results are shown in Table 4.

[Table 4]

| Example | Peel strength (N/mm) |
|---|---|
| Example 1 | 0.005 |
| Example 2 | 0.001 |
| Example 3 | 0.008 |
| Comparative Example 1 | 0.001 |
| Comparative Example 2 | 0.11 |

Referring to Table 4, the separators of Examples 1 and 2 were found to have smaller peel strengths, compared to the separator of Comparative Example 2, and accordingly, to be less sticky. The separator of Comparative Example 1 had satisfactory, small stickiness, but was found inapplicable due to the weak binding strength to the electrode as supported by the results of Evaluation Example 2.

Evaluation Example 4: Evaluation of charge-discharge characteristics

The lithium secondary batteries of Manufacture Examples 1 to 3 and Comparative Manufacture Examples 1 and 2, manufactured as pouched cells using the separators of Examples 1 to 3 and Comparative Examples 1 and 2, respectively, were each charged with a constant current of 0.2C rate at about 25°C to a voltage of about 4.2V, and then with a constant voltage of about 4.2V to a current of about 0.01C, followed by discharging with a constant current of 0.2C to a voltage of 3.05V (Formation process).

Subsequently, each of the lithium secondary batteries after the formation process was charged with a constant current of 0.5C rate at about 25°C to a voltage of about 4.2V, and then with a constant voltage of about 4.2V to a current of about 0.01C, followed by discharging with a constant current of about 0.5C to a voltage of about 3.0V. This cycle of charging and discharging was repeated 30 times.

The results of the charge-discharge test are shown in Table 5.

A charge-discharge efficiency at the 1st cycle) was calculated using Equation 1, and a capacity retention rate was calculated using Equation 2.

< Equation 1>

Charge-discharge efficiency = (Discharge capacity at $1^{st}$ cycle/ Charge capacity at $1^{st}$ cycle) ×100

< Equation 2>

Capacity retention rate = (Discharge capacity at $30^{th}$ cycle/Discharge capacity at 1st cycle)×100

[Table 5]

| Example | Charge-discharge efficiency (%) | Capacity retention rate (%) |
|---|---|---|
| Manufacture Example 1 | 98.3 | 95 |
| Manufacture Example 2 | 98.3 | 94 |
| Manufacture Example 3 | 98.2 | 95 |
| Comparative Manufacture Example 1 | 98.1 | 91 |
| Comparative Manufacture Example2 | 98.2 | 94 |

Referring to Table 5, the lithium secondary batteries of Manufacture Examples 1 to 3 were found to be improved in capacity retention rate and charge-discharge efficiency characteristics, compared to the lithium secondary battery of Comparative Manufacture Example 1. The lithium secondary battery of Comparative Manufacture Example 2 was satisfactory in terms of capacity retention rate and charge-discharge efficiency characteristics, but the separator thereof still had strong stickiness as described in Evaluation Example 2.

As described above, according to the one or more of the above embodiments of the present disclosure, a separator for a lithium secondary battery may have improved binding strength to an electrode, and a surface thereof may be not sticky, and thus migration of lithium ions at the interface between the electrode and the separator may be facilitated to improve charge-discharge efficiency. A lithium secondary battery including the separator may maintain the binding strength between the separator and the electrode when it is used for a long time, and thus may have improved lifetime characteristics.

It should be understood that the exemplary embodiments described therein should be considered in a descriptive sense only and not for purposes of limitation. Descriptions of features or aspects within each embodiment should typically be considered as available for other similar features or aspects in other embodiments.

While one or more embodiments of the present disclosure have been described with reference to the figures, it will be understood by those of ordinary skill in the art that various changes in form and details may be made therein without departing from the scope of the present disclosure as defined by the following claims.

**Claims**

1.  A separator for a lithium secondary battery, comprising:

    a porous base; and
    a first coating layer disposed on a surface of the porous base,
    wherein the first coating layer comprises a (meth)acrylic acid ester-based polymer having a glass transition temperature of about 10°C to about 60°C.

2.  The separator of claim 1, wherein the first coating layer is disposed opposite to a cathode of the lithium secondary battery.

3.  The separator of claim 1, wherein the (meth)acrylic acid ester-based polymer has a glass transition temperature of about 20°C to about 60°C, optionally from 30°C to about 50°C.

4.  The separator of claim 1 or 2, wherein the first coating layer is a dot-pattern layer comprising a plurality of dots arranged at a predetermined interval.

5.  The separator of claim 4, wherein the plurality of dots have an average diameter of about 0.1 mm to about 1 mm, an interval of about 0.1 mm to about 10 mm, and an average thickness of about 0.3 $\mu$m to about 10 $\mu$m.

6.  The separator of any one of claims 1 to 5, further comprising a second coating layer disposed on a surface of the porous base opposite to the first coating layer and comprising a (meth)acrylic acid ester-based polymer.

7.  The separator of claim 6, wherein the second coating layer is a dot-pattern layer comprising a plurality of dots arranged at a predetermined interval.

8.  The separator of claim 7, wherein the plurality of dots have an average diameter of about 0.1 mm to about 1 mm, an interval of about 0.1 mm to about 10 mm, and an average thickness of about 0.3 $\mu$m to about 10 $\mu$m.

9.  The separator of any one of claims 6 to 7, further comprising an inorganic coating layer disposed between the porous base and the second coating layer, the inorganic coating layer comprising inorganic particles of at least one selected from the group consisting of colloidal silica, $\alpha$- alumina ($\alpha$-Al$_2$O$_3$), $\gamma$- alumina ($\gamma$-Al$_2$O$_3$), boehmite ($\gamma$-AlO (OH)), gibbsite ($\gamma$-Al (OH)$_3$), zirconium oxide, magnesium fluoride, BaTiO$_3$, SnO$_2$, CeO$_2$, MgO, NiO, CaO, ZnO, Y=O$_3$, TiO$_2$, and SiC.

10. The separator of any one of claims 1 to 9, further comprising an inorganic coating layer disposed between the porous base and the first coating layer, the inorganic coating layer comprising inorganic particles of at least one selected from the group consisting of colloidal silica, $\alpha$- alumina ($\alpha$-Al$_2$O$_3$), $\gamma$- alumina ($\gamma$-Al$_2$O$_3$), boehmite ($\gamma$-AlO (OH)), gibbsite ($\gamma$-Al (OH)$_3$), zirconium oxide, magnesium fluoride, BaTiO$_3$, SnO$_2$, CeO$_2$, MgO, NiO, CaO, ZnO, Y$_2$O$_3$, TiO$_2$, and SiC.

11. The separator of any one of claims 1 to 10, wherein the (meth)acrylic acid ester-based polymer is a polymerization product between an ethylenically unsaturated carboxylic acid ester and a monomer that is copolymerizable with the ethylenically unsaturated carboxylic acid ester.

12. A lithium secondary battery comprising:

    a cathode;

an anode; and
a separator of any one of claims 1 to 11 disposed between the cathode and the anode.

13. A method of manufacturing a lithium secondary battery, the method comprising:

forming a battery assembly that comprises a cathode, an anode, and the separator of any one of claims 1 to 11;
rolling up or stacking the battery assembly and then heating pressing the resultant at a temperature of at about 80°C to about 120°C to obtain a combined battery assembly; and
impregnating the combined battery assembly with an electrolyte.

14. The method of claim 13, wherein the separator is obtained by coating an aqueous emulsion comprising a (meth)acrylic acid ester-based polymer particle on a surface of a porous base and drying the coated (meth)acrylic acid ester-based polymer particle.

FIG. 1

# FIG. 2

EP 2 985 813 A1

Europäisches Patentamt
European Patent Office
Office européen des brevets

## EUROPEAN SEARCH REPORT

Application Number

EP 15 18 0828

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/050708 A1 (ZEON CORP) 3 April 2014 (2014-04-03) | 1-3,6, 10-13 | INV. H01M2/14 |
| Y | * the whole document * | 4,5,7-9 | H01M2/16 |
| X,P | & EP 2 903 055 A1 (ZEON CORP [JP]) 5 August 2015 (2015-08-05) * paragraphs [0016], [0018] - [0020], [0070], [0071], [0114], [0115], [0118], [0120], [0126], [0143], [0149], [0223], [0226] * * paragraphs [0229] - [0231] * ----- | 1-3,6, 10-13 | H01M10/0525 H01M10/058 |
| Y | WO 2009/096671 A2 (LG CHEM CO LTD) 6 August 2009 (2009-08-06) * paragraphs [0009], [0010] * ----- | 4,5,7-9 | |

TECHNICAL FIELDS SEARCHED (IPC)

H01M

The present search report has been drawn up for all claims

| Place of search | Date of completion of the search | Examiner |
|---|---|---|
| Munich | 30 November 2015 | Möller, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 0828

This annex lists the patent family members relating to the patent documents cited in  the above-mentioned European search report.
The members are as contained in the European Patent Office EDP file on
The European Patent Office is in no way liable for these particulars which are merely given for the purpose of information.

30-11-2015

| Patent document cited in search report | Publication date | Patent family member(s) | Publication date |
|---|---|---|---|
| WO 2014050708 A1 | 03-04-2014 | CN 104662707 A | 27-05-2015 |
| | | EP 2903055 A1 | 05-08-2015 |
| | | KR 20150064040 A | 10-06-2015 |
| | | US 2015270523 A1 | 24-09-2015 |
| | | WO 2014050708 A1 | 03-04-2014 |
| WO 2009096671 A2 | 06-08-2009 | CN 101926024 A | 22-12-2010 |
| | | CN 103928650 A | 16-07-2014 |
| | | EP 2248209 A2 | 10-11-2010 |
| | | EP 2927993 A1 | 07-10-2015 |
| | | JP 5572101 B2 | 13-08-2014 |
| | | JP 2011512005 A | 14-04-2011 |
| | | JP 2014239042 A | 18-12-2014 |
| | | KR 20090083854 A | 04-08-2009 |
| | | US 2010323230 A1 | 23-12-2010 |
| | | WO 2009096671 A2 | 06-08-2009 |

EPO FORM P0459

For more details about this annex : see Official Journal of the European Patent Office, No. 12/82